## Europäisches Patentamt
## European Patent Office
## Office européen des brevets

(19)

(11) Numéro de publication: **0 003 699**
**A2**

(12)

# DEMANDE DE BREVET EUROPEEN

(21) Numéro de dépôt: 79400066.1

(22) Date de dépôt: **01.02.79**

(51) Int. Cl.²: **A 01 G 9/12, F 24 J 3/02**

(30) Priorité: **08.02.78 FR 7803929**

(43) Date de publication de la demande: **22.08.79**
**Bulletin 79/17**

(84) Etats contractants désignés: **BE DE GB NL**

(71) Demandeur: **INSTITUT EUROPEEN D'ECOLOGIE,**
**1, rue des Récollets, F-57000 Metz (FR)**

(72) Inventeur: **Grosse, Charles, 11, rue des Carolingiens,**
**F-57100 Thionville (FR)**

(54) **Support activateur de croissance des plantes.**

(57) a) Support activateur de croissance de plantes emmagasinant la chaleur solaire qu'il transmet à la plante et au sol et permettant un arrosage ponctuel des racines. Déposant: Institut européen d'écologie.

b) Le support est réalisé en tube métallique noir mat de longueur et diamètre variable suivant la taille de la plante.

Ce tube est muni d'ailettes ou bavette également noir mat pour en augmenter la surface utile.

c) Ce support est indiqué pour augmenter le rendement d'une culture en cas de climat trop froid ou d'ensoleillement insuffisant.

Il permet également une importante économie d'eau d'arrosage.

ACTORUM AG

DESCRIPTION

a) Support activateur de croissance pour plantes.

b) La présente invention concerne les supports utilisés pour maintenir ou soutenir différentes sortes de plantes.

c) Les supports habituels ne servent qu'à maintenir ou soutenir les plantes. Le dispositif proposé emmagasine la chaleur solaire et la transmet à la plante et au sol qu'il réchauffe.
Il permet un arrosage limité à la racine.     .

d) Le fait d'emmagasiner la chaleur solaire par les ailettes ou bavette et de la transmettre au sol par le support augmente la température du sol de plusieurs degrés et accroît dans de notables proportions la croissance de la plante.
L'arrosage s'effectuant par l'intérieur du support arrive à la racine même et peut se faire en plein soleil sans risques pour la plante.
Dans certaines applications l'écran que constitue le support (plantes basses) freine l'évaporation au pied de la plante.
L'économie d'eau ainsi réalisée dépasse 50 %.
Les feuilles et tiges n'étant pas arrosées sont moins sensibles aux maladies virales et parasitaires.
L'arrosage ne se faisant pas en surface, la croissance des mauvaises herbes est handicapée.

e) Le support est constitué d'un tube de diamètre et de hauteur variable suivant la plante à cultiver.
Il est réalisé en métal bon conducteur de la chaleur. Ce tube est muni d'ailettes ou d'une bavette augmentant la surface d'exposition au soleil. Il est éloxé ou peint en noir mat.
Suivant la taille des plantes à soutenir les dimensions et la réalisation varient. Les dessins annexés montrent un mode de réalisation

pour plantes hautes et pour plantes basses.

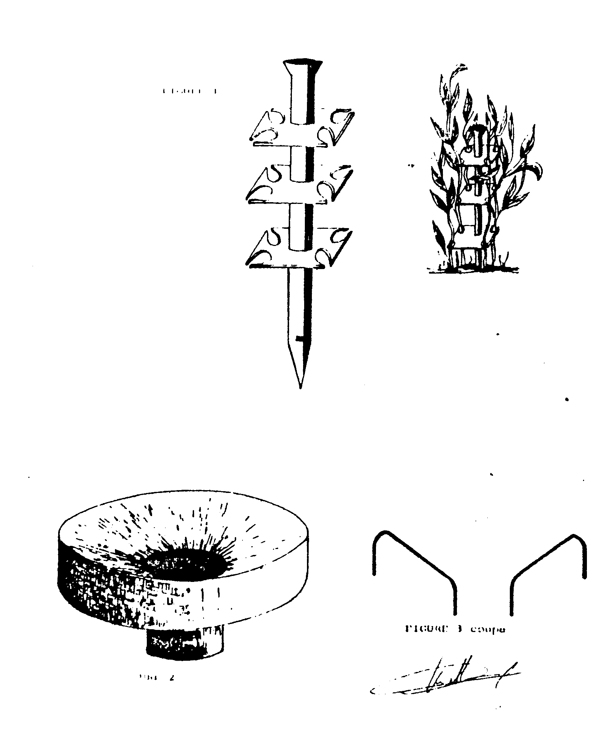

1) pour plantes hautes (tomates, pois, haricots, vigne, plantes ornementales - figure 1

Le support est constitué d'un tube travaillé en pointe à une extrémité, en entonnoir à l'autre. Il est percé à quelques centimètres
de la pointe de trous ou fentes. Sur ce tube sont enfilées à force
plusieurs plaquettes de forme indifférente comportant un trou central et des encoches périphériques. Le trou central des plaquettes
est de dimension telle qu'il permet un contact intime avec le tube
par emboitement, sertissage ou soudure.

Les encoches périphériques sont soigneusement ébavurées.

Le tube est enfoncé dans le sol par son extrémité pointue au pied
de la plante qui en croissant se maintient dans les encoches périphériques, l'extrémité supérieure en forme d'entonnoir servant à
l'arrosage.

2) pour plantes basses (fraisiers, melons, concombres, etc.) - figures
2 et 3

L'ensemble formant un gros tube prolongé par un entonnoir très évasé la partie extérieure rabattue vers le bas formant une bavette
en forme de couronne circulaire. La partie centrale tubulaire dépasse la couronne de quelques centimètres.

L'ensemble est enfoncé dans le sol, la partie évasée vers le haut,
le plant ou les graines étant disposés dans l'orifice central.

f) Le support activateur de croissance sous ses différentes formes s'utilise indifféremment en culture maraichere ou ornementale.

Il est particulièrement indiqué pour l'obtention de récoltes sous des
climats froids et en cas d'ensoleillement insuffisant.

De plus, il permet l'obtention de légumes et fruits exempt de terre et
dispense du paillage pratiqué pour certaines cultures (fraisiers p.e.)

REVENDICATIONS

Préambule 1

Support destiné à améliorer la croissance des plantes et le rendement des cultures maraichères et ornementales.

Caractérisé par le fait qu'il est réalisé en métal bon conducteur de la chaleur.

Préambule 2

Dispositif suivant revendication 1.

Caractérisé par le fait qu'il est peint ou éloxé en noir mat.

Préambule 3

Dispositif suivant revendication 1.

Caractérisé par la fait qu'il est creux.

Préambule 4 : rappel de préambule 1

Support destiné à améliorer la croissance des plantes et le rendement des cultures maraichères et ornementales.

Caractérisé par le fait qu'il est réalisé en matériau de teinte foncée dans le but de conserver la chaleur solaire.

Préambule 5 : dispositif suivant 1

Caractérisé par la fait que dans la forme haute page 2 - ligne 2, une bague ouverte sur une petite partie de sa circonférence est munie d'une rainure périphérique qui la guide dans l'encoche assurant le maintien de la tige de la plante.

Préambule 6 : dispositif suivant 3

Caractérisé par le fait que dans la forme basse page 2 - ligne 16, il peut s'ouvrir en deux parties articulées ou non.

0003699

FIGURE 1

FIGURE 3 coupe

fig 2